# EUROPÄISCHE PATENTSCHRIFT

(11) **EP 1 912 818 B1**
(45) Veröffentlichungstag und Bekanntmachung des Hinweises auf die Patenterteilung: **01.01.2014**
(21) Anmeldenummer: 06762374.4
(22) Anmeldetag: 04.07.2006
(51) Int. Cl.: B60K 15/04

(54) **EINFÜLLSTUTZEN FÜR EINEN BEHÄLTER**
FILLER TUBE FOR A TANK
TUBULURE DE REMPLISSAGE POUR RECIPIENT

(30) Priorität: 13.07.2005 DE 202005011575 U
(43) Veröffentlichungstag der Anmeldung: 23.04.2008
(73) Patentinhaber: Reutter GmbH, 71397 Leutenbach (DE)
(72) Erfinder: HORLACHER, Frank, 71332 Waiblingen (DE); KÖRBER, René, 71397 Leutenbach (DE); MÜLLER-RIEDERER, Gerhard, 74626 Bretzfeld (DE)
(74) Vertreter: Dreiss
(86) Internationale Anmeldenummer: PCT/EP2006/006480
(87) Internationale Veröffentlichungsnummer: WO 2007/006451

(56) Entgegenhaltungen:
- EP-A1- 0 288 225
- EP-A2- 1 502 794
- DE-A1- 3 425 461
- DE-U1- 20 319 414
- US-A- 4 195 673
- US-A- 4 701 198
- US-A- 5 238 034
- US-A- 5 474 115

## Beschreibung

Die vorliegende Erfindung bezieht sich auf einen Einfüllstützen für einen Behälter aus Kunststoff zum Verhindern einer Fehlbefüllung des Behälters nach dem Oberbegriff des Anspruchs 1.

Bei Fehlbefüllungssystemen für beispielsweise Kraftfahrzeugtanks ist es bekannt, den Einfüllstutzen mit einem Permanentmagneten und die Zapfpistole mit einem Sensor zu versehen, welcher Sensor dann, wenn er mit dem Magnetfeld des Permanentmagneten in Berührung kommt, ein Zuflussventil freigibt. Bei solchen Systemen ist es bekannt, den Behälter aus Kunststoff und den Einfüllstutzen für den Behälter aus Aluminium herzustellen. Für diese Materialkombination von Einfüllstutzen und Behälter wird der Permanentmagnet zwischen zwei Dichtringen auf eine Hülse aus Kunststoff gesetzt, über die eine Haube aus Kunststoff derart gebracht wird, dass der den Permanentmagnet aufnehmende Innenraum flüssigkeitsdicht ist. Dieser mehrteilige Kunststoffhalter wird in dem Einfüllstutzen aus Aluminium befestigt und mit dem Behälter aus Kunststoff verschweißt. Diese Ausführung des Einfüllstutzens für ein Fehlbefüllungssystem hat eine relativ aufwendige Herstellung und Montage zur Folge, da der Permanentmagnet in ein gesondertes Halterbauteil, das aus mehreren Einzelteilen besteht, eingebracht werden muss (EP 1 502 794 A2).

Aufgabe der vorliegenden Erfindung ist es, einen Einfüllstutzen für einen Behälter aus Kunststoff zum Verhindern einer Fehlbefüllung des Behälters der eingangs genannten Art zu schaffen, der in einfacherer und weniger Bauteile benötigender Weise gefertigt und montiert werden kann.

Zur Lösung dieser Aufgabe sind bei einem Einfüllstutzen für einen Behälter aus Kunststoff zum Verhindern einer Fehlbefüllung des Behälters der genannten Art die im Anspruch 1 angegebenen Merkmale vorgesehen.

Durch die erfindungsgemäßen Maßnahmen ist es möglich, in dem für eine Fehlbefüllung geeigneten Einfüllstutzen lediglich ein einziges mit dem Permanentmagneten versehenes Bauelement vorzusehen, das als Einsatzteil zusammen mit dem Einfüllstutzen eine flüssigkeitsdichte Aufnahme des Permanentmagneten ermöglicht.

Ein einfaches Einsetzen des Kunststoffhalters in den Einfüllstutzen ergibt sich dann, wenn die Merkmale nach Anspruch 4 vorgesehen sind.

Mit den Merkmalen nach Anspruch 3 und ggf. denen nach Anspruch 4 ist in einfacher Weise eine Belüftung des zu füllenden Behälters erreicht.

Eine vorteilhafte konstruktive Ausgestaltung des Einfüllstutzens ergibt sich durch die Merkmale nach Anspruch 5.

Die vorliegende Erfindung bezieht sich ferner auf einen Behälter aus Kunststoff mit einem angeschweißten Einfüllstutzen nach Anspruch 1 und ggf. mindestens einem der folgenden Ansprüche, wie dies gemäß Anspruch 6 vorgesehen ist.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist.

Es zeigen:

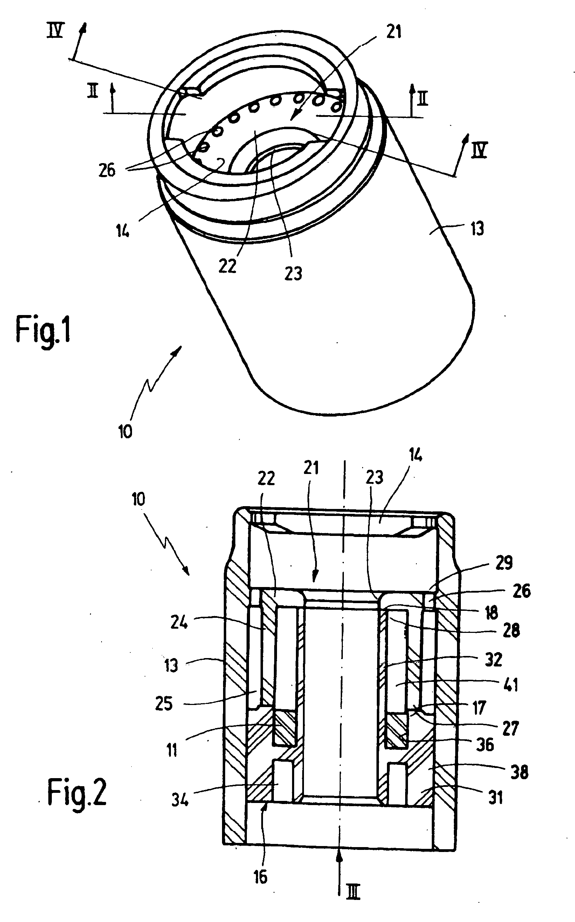

- Figur 1: in von der Einfüllseite her perspektivischer Darstellung einen Einfüllstutzen gemäß einem bevorzugten Ausführungsbeispiel vorliegender Erfindung;
- Figur 2: einen Schnitt längs der Linie II-II der Figur 1,

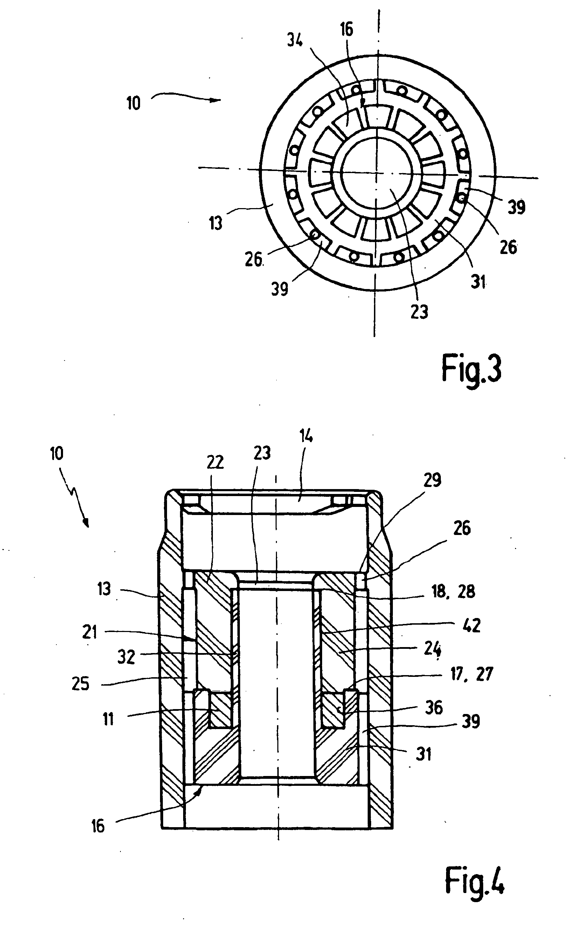

- Figur 3: eine Unteransicht gemäß Pfeil III der Figur 2 und
- Figur 4: einen Schnitt längs der Linie IV-IV der Figur 1.

Der in der Zeichnung gemäß einem bevorzugten Ausführungsbeispiel dargestellte Einfüllstutzen 10 ist mit einem Permanentmagneten 11, hier in Form eines Ringmagneten versehen, der als Schaltmagnet für ein Fehlbefüllungssystem für einen Behälter, der mit einem derartigen Einfüllstutzen 10 verbunden ist, dient. Bei einem solchen Fehlbefüllungssystem ist die Zapfpistole für die Flüssigkeit mit einem Sensor versehen, der beim Einführen der Zapfpistole vom Permanentmagnetfeld aktiviert wird, was zu einem Öffnen eines Zuflussventils führt. Beispielsweise werden derartige Systeme für Dieselkraftstoff oder auch zum Befüllen von Behältern mit Harnstofflösung für Katalysatoren zur NOₓ₋Reduktion bei LKWs verwendet.

Der Einfüllstutzen 10 besitzt eine Stutzenhülse 13, die an ihrem freien Zugangsende mit einer Öffnung 14 versehen, die derart ausgebildet ist, dass auf die Stutzenhülse 13 bzw. ein Bajonettverschlussdeckel lösbar aufbringbar ist. Das andere Ende der Stutzenhülse 13 aus Kunststoff wird in nicht dargestellter Weise in noch zu erläuterndem zusammengebautem Zustand mit dem hier nicht dargestellten Behälter aus Kunststoff verschweißt.

In die Stützenhülse 13 ist ein Halter 10 ebenfalls aus Kunststoff für den Permanentmagneten 11 eingesetzt und befestigt. Dabei ist der Permanentmagnet 11 zwischen dem Halter 16 und der Stutzenhülse 13 flüssigkeitsdicht aufgenommen.

Hierzu besitzt die Stutzenhülse 13 des Einfüllstutzens 10 in einem axialen Abstand zu ihrer Bajonettverschlussöffnung 14 einen Innenkorb 21, der mit der Stutzenhülse 13 einstückig geformt ist. Der einstückige Innenkorb 21 besitzt einen Boden 22, der außenumfangsseitig mit dem Innenumfang der Stutzenhülse 13 einstückig geformt ist. Der Boden 22 besitzt eine mittige Öffnung 23, die unterhalb der Bajonettverschlussöffnung 14 angeordnet ist und mit dieser im wesentlichen fluchtet. Vom Boden 22 herabhängend besitzt der Innenkorb 21 einen konzentrisch zur Stutzenhülse 13 angeordneten Rohrabschnitt 24, zwischen dessen Außenumfang und dem Innenumfang der Stutzenhülse 13 ein Ringraum 25 verbleibt. An seinem den Rohrabschnitt 24 überragenden radial äußeren Haltering 29 des Bodens 22 sind über den Umfang gleichmäßig verteilt angeordnete axiale Bohrungen 26 versehen, die in den Ringraum 25 münden. Der Rohrabschnitt 24 ist innen umfangseitig mit sich axial erstreckenden Rillen 41 und Rippen 42 versehen.

In dieser konstruktiven Ausgestaltung wird der Einfüllstutzen 10 aus Stutzenhülse 13 und Innenkorb 21 einstückig aus Kunststoff geformt beispielsweise spritzgegossen.

Der Halter 16 aus Kunststoff, der ebenfalls einstückig ist, besitzt einen dickwandiges zylindrisches Grundteil 31, das dem Innenkorb 21 zugewandt mit einem Aufnahmeringraum 36 versehen ist, in welchem der hier ringförmige Permanentmagnet 11 radial unbewegbar aufgenommen ist. Die dem Aufnahmeringraum 36 begrenzende Innenwand ist in axialer Richtung zu einem Innenzylinder 32 verlängert, der an seinem freien Ende eine obere Ringfläche 18 bildet. Das Grundteil 31 ist radial außenseitig mit einer oberen Ringfläche 17 versehen. Die axiale Abmessung des Permanentmagneten 11 ist etwas geringer als die axiale Abmessung des Aufnahmeringraums 36. Der Innenzylinder 32 begrenzt mit dem Grundteil 31 einen mittigen Aufnahmeraum für eine nicht dargestellte Zapfpistole und dient als Zuflussraum für die betreffende Flüssigkeit in den nicht dargestellten Behälter. Die axiale Abmessungsdifferenz zwischen Grundteil 31 und Innenzylinder 32 entspricht der axialen Differenz zwischen Boden 22 und Rohrabschnitt 24 des Innenkorbs 21. Die freie Unterseite des Grundteils 31 ist mit über den Umfang verteilten axialen Sacklochausnehmungen 34 versehen.

Der Außenumfang des Grundteils 31 ist mit über den Umfang gleichmäßig verteilt angeordneten axialen Rippen 38 und Rillen 39 versehen. Die Rillen 39 sind dabei so angeordnet, dass sie axial mit jeder zweiten axialen Bohrung 26 im Boden 22 des Einfüllstutzens 10 fluchten, während die dazwischen liegenden axialen Bohrungen 26 von den Rippen 38 abgedeckt sind. Über die Rippen 38 ist der Halter 16 in der Stutzenhülse 13 zentriert und ggf. mit dieser verklebt.

Der so aufgebaute Halter 16 aus Kunststoff wird nach dem Einbringen des ringförmigen Permanentmagneten 11 in den Aufnahmeringraum 36 mit dem vorstehenden Innenzylinder 32 voraus in die Unterseite der Stutzenhülse 13 eingeschoben und zwar bis die obere Ringfläche 17 des Grundteils 31 des Halters 16 an der unteren Ringfläche 27 des Rohrabschnitts 24 und die obere Ringfläche 18 des Innenzylinders 32 an der Unterfläche 28 des die Öffnung 23 umgebenden bzw. begrenzenden Bodenbereichs anliegt. Dabei wird sowohl die Ringfläche 17 mit der Ringfläche 27 als auch die Ringfläche 18 mit der ringförmigen Fläche 28 klebend verbunden, so dass der Aufnahmeringraum 36 mit dem Permanentmagneten 11 gegenüber dem inneren des Einfüllstutzens 10 bzw. dessen Stutzenhülse 13 und Halter 16 flüssigkeitsdicht abgeschirmt ist.

Der Halter 16 endet mit seiner Unterseite axial vor der Unterseite der Stutzenhülse 13, die in nicht dargestellter Weise in oben beschriebenem montiertem Zustand mit dem nicht dargestellten Behälter aus Kunststoff verschweißt wird.

## Patentansprüche

1. Einfüllstutzen (10) mit einer mit einem Bajonettverschlussdeckel verschließbaren Öffnung (14) für einen Behälter aus Kunststoff zum Verhindern einer Fehlbefüllung des Behälters, mit einem flüssigkeitsdicht aufgenommenen Permanentmagneten (11) und einem Kunststoffhalter (16) für den Permanentmagneten (11), wobei der Einfüllstutzen (10) aus Kunststoff ist und der den Permanentmagneten (11) aufnehmende Kunststoffhalter (16) im Einfüllstutzen (10) angeordnet und unmittelbar mit dem Einfüllstutzen (10) flüssigkeitsdicht verbunden ist, **dadurch gekennzeichnet, dass** der einstückige Kunststoffhalter (16) einen bodenseitig abgeschlossenen Ringraum (36) für den Permanentmagneten (11) aufweist, wobei der Ringraum (36) mit mindestens einer radial innerhalb des Einfüllstutzens (10) vorgesehenen Ringabdeckung verbindbar ist und hierfür mit axial ungleich langen zylindrischen Begrenzungswänden (31, 32) versehen ist, deren obere Ringflächen (17, 18) an jeweils einer Ringfläche (27, 28) des Einfüllstutzens (10) anliegen und dort klebend verbunden sind.

2. Einfüllstutzen nach Anspruch 1, **dadurch gekennzeichnet, dass** der Kunststoffhalter (16) im Einfüllstutzen (10) mit außenumfangsseitigen axial verlaufenden Rippen (38) versehen zentriert ist.

3. Einfüllstutzen nach mindestens einem der vorhergehenden Ansprüche, **dadurch gekennzeichnet, dass** vorzugsweise mehrere über einen radial inneren Haltering (29) des Einfüllstutzens (10) verteilt angeordnete axiale Lüftungsbohrungen (26) vorgesehen sind.

4. Einfüllstutzen nach den Ansprüchen 2 und 3, **dadurch gekennzeichnet, dass** die axialen Lüftungsbohrungen (26), im Haltering (29) des Einfüllstutzens (10), mit umfangsseitig zwischen den Rippen (38) des Kunststoffhalters (16) angeordneten Rillen (39) fluchten.

5. Einfüllstutzen nach mindestens einem der vorhergehenden Ansprüche, **dadurch gekennzeichnet, dass** der Einfüllstutzen (10) in einem axialen Abstand zu seiner Verschlussdeckelaufnahme (14) mit einem auf dem Kopf stehenden, konzentrischen Innenkorb (21) einstückig ist, dessen Boden (22) radial außenseitig mit der Innenwand des Einfüllstutzens (10) verbunden sowie an die Innenwand angrenzend mit den axialen Lüftungsbohrungen (26) und mittig mit einer zentralen axialen Öffnung (23) versehen ist und zwischen dessen konzentrisch angeordnetem zylindrischem Innenkorb (21) und der Innenwand des Einfüllstutzens (10) ein mit den Entlüftungsöffnungen (26) fluchtender ringförmiger Freiraum (34) besteht.

6. Behälter aus Kunststoff mit einem angeschweißten Einfüllstutzen (10) nach Anspruch 1 und ggf. mindestens einem der folgenden Ansprüche.

## Claims

1. A filler tube (10) for a plastic tank, the tube having an opening (14) that is closable by a bayonet-mount cap, for preventing misfilling of the tank, having a permanent magnet (11) received in fluid-tight fashion and a plastic mount (16) for the permanent magnet (11), in which the filler tube (10) is of plastic, and the plastic mount (16) receiving the permanent magnet (11) is disposed in the filler tube (10) and joined directly in fluid-tight fashion to the filler tube (10), **characterized in that** the one-piece plastic mount (16) has an annular chamber (36), closed off at the bottom, for the permanent magnet (11), and the annular chamber (36) is connectable to at least one annular covering provided radially inside the filler tube (10) and for that purpose is provided with cylindrical boundary walls (31, 32) of unequal length, the upper annular faces (17, 18) of which walls each rest on a respective annular face (27, 28) of the filler tube (10) and are connected adhesively there.

2. The filler tube according to claim 1, **characterized in that** the plastic mount (16) is centered in the filler tube (10) with ribs (38) extending axially on the outer circumference.

3. The filler tube according to at least one of the foregoing claims, **characterized in that** preferably a plurality of axial vent openings (26) are provided, distributed over a radially inner mounting ring (29) of the filler tube (10).

4. The filler tube according to claims 2 and 3, **characterized in that** the axial vent openings (26) in the mounting ring (29) of the filler tube (10) are in alignment with grooves (39) disposed on the circumference between the ribs (38) of the plastic mount (16).

5. The filler tube according to at least one of the foregoing claims, **characterized in that** the filler tube (10), axially spaced apart from its closure cap receptacle (14), is in one piece with a concentric inner basket (21) standing on its head, the bottom (22) of which basket is connected radially on the outside with the inner wall of the filler tube (10) and is provided, adjoining the inner wall, with the axial vent openings (26) and centrally with a central axial opening (23), and between its concentrically disposed cylindrical inner basket (21) and the inner wall of the filler tube (10), there is an annular free space (34) in alignment with the vent openings (26).

6. A plastic tank having a welded-on filler tube (10) according to claim 1 and optionally at least one of the subsequent claims.

## Revendications

1. Tubulure de remplissage (10) comprenant une ouverture (14) pouvant être fermée par un couvercle à joint à baïonnette pour un récipient en plastique destinée à empêcher un remplissage incorrect du récipient, comprenant un aimant permanent (11) reçu de façon étanche aux liquides et un support en plastique (16) pour l'aimant permanent (11), étant entendu que la tubulure de remplissage (10) est en plastique et le support en plastique (16) recevant l'aimant permanent (11) est agencé dans la tubulure de remplissage (10) et relié directement avec la tubulure de remplissage (10) de façon étanche aux liquides, **caractérisée en ce que** le support en plastique réalisé d'une seule pièce (16) présente un espace annulaire fermé du côté du fond (36) pour l'aimant permanent (11), étant entendu que l'espace annulaire (36) peut être relié avec au moins une coiffe annulaire prévue de façon radiale à l'intérieur de la tubulure de remplissage (10) et il est pourvu à cette fin de parois de délimitation cylindriques (31, 32) de longueurs différentes axialement, dont les surfaces annulaires supérieures (17, 18) prennent chacune appui sur une surface annulaire (27, 28) de la tubulure de remplissage (10) et sont reliées à cet endroit de façon collée.

2. Tubulure de remplissage selon la revendication 1, **caractérisée en ce que** le support en plastique (16) est centré dans la tubulure de remplissage (10) au moyen de nervures (38) s'étendant axialement sur le côté de sa circonférence extérieure.

3. Tubulure de remplissage selon au moins l'une des revendications précédentes, **caractérisée en ce qu'**il est de préférence prévu plusieurs ouvertures d'aération axiales (26) agencées de façon répartie autour d'une bague de support intérieure en direction radiale (29) de la tubulure de remplissage (10).

4. Tubulure de remplissage selon les revendications 2 et 3, **caractérisée en ce que** les ouvertures d'aération axiales (26) sont alignées, dans la bague de support (29) de la tubulure de remplissage (10), avec des rainures (39) agencées sur le côté de la circonférence entre les nervures (38) du support en plastique (16).

5. Tubulure de remplissage selon au moins l'une des revendications précédentes, **caractérisée en ce que** la tubulure de remplissage (10) est réalisée d'une seule pièce, à une distance axiale par rapport à la réception du couvercle de fermeture (14), avec un panier intérieur concentrique dressé sur la tête (21) dont le fond (22) est relié avec la paroi intérieure de la tubulure de remplissage (10) sur le côté extérieur en direction radiale et pourvu d'une ouverture centrale axiale (23) sur la paroi intérieure, en position adjacente aux ouvertures d'aération axiales (26) et au centre, et il existe un espace libre de forme annulaire (34) aligné avec les ouvertures d'aération (26) entre ledit panier intérieur (21) agencé de façon concentrique et la paroi intérieure de la tubulure de remplissage (10).

6. Récipient en plastique comprenant une tubulure de remplissage soudée (10) selon la revendication 1, et le cas échéant, au moins une des revendications suivantes.
